# EUROPEAN PATENT SPECIFICATION

(11) **EP 4 496 778 B1**
(45) Date of publication and mention of the grant of the patent: **25.06.2025**
(21) Application number: 23712562.0
(22) Date of filing: 23.03.2023
(51) Int. Cl.: C03C 4/02, C03B 5/00, C03C 1/00, C03B 9/193, C03C 3/087

(54) **MASS-PRODUCED GLASS CONTAINER WITH VISIBLE LIGHT SHIELDING AND FABRICATION METHOD THEREOF USING RECOVERED POST-CONSUMER GLASS**
GLASBEHÄLTER AUS MASSENPRODUKTION MIT ABSCHIRMUNG GEGEN SICHTBARES LICHT UND HERSTELLUNGSVERFAHREN DAFÜR UNTER VERWENDUNG VON WIEDERGEWONNENEM ALTGLAS
RÉCIPIENT EN VERRE PRODUIT EN MASSE COMPORTANT UNE PROTECTION CONTRE LA LUMIÈRE VISIBLE ET SON PROCÉDÉ DE FABRICATION À L'AIDE DE VERRE POST-CONSOMMATION RÉCUPÉRÉ

(30) Priority: 23.03.2022 WO PCT/ES2022/070168
(43) Date of publication of application: 29.01.2025
(73) Proprietor: Estal Packaging, SA, 17220 Sant Feliu de Guíxols (Girona) (ES); Bewex B.V., 7901 JZ Hoogeveen (NL)
(72) Inventor: ALBERTI GASCONS, Gerard, 17220 Sant Feliu de Guíxols (ES); DE BOER, Evert, 6006 Luzern (CH)
(74) Representative: Torner, Juncosa I Associats, SL
(86) International application number: PCT/EP2023/057430
(87) International publication number: WO 2023/180430

(56) References cited:
- CZ-U1- 116
- DE-T2- 69 107 012
- US-A1- 2020 071 221

## Description

### Technical Field

The present invention relates to a mass-produced glass container with visible light shielding, between 450nm and 680nm wavelength, and fabrication method thereof using recovered post-consumer glass.

The mass-produced glass containers are containers uniformly produced by automatic means, all with identical shape.

The recovered post-consumer glass is a soda-lime-silica glass that has already been used by consumers and has been recovered, typically by means of selective collection processes. This recovered post-consumer glass is a heterogeneous glass with a heterogeneous chromatic composition, having a mixture of glass pieces with different transparencies, of different shades of color, and also of different color saturations.

The proposed invention proposes using such soda-lime-silica recovered post-consumer glass with heterogeneous chromatic composition as a raw material in a percentage above 80% in weight and also to include additives including at least cobalt oxide, nickel oxide, manganese oxide, chromium oxide and iron oxide in proportions selected to produce a container providing complete shielding against visible light between 450nm and 680nm wavelengths.

The use of recovered post-consumer glass with such high percentage will affect the color of the containers produced, therefore requiring additional measures to ensure that the produced receptacles effectively blocks the visible light in such frequencies.

### State of the Art

It is common to use a certain percentage of recycled glass to produce new containers in the glass industry, because it is easy to recycle glass and it allows energy savings, and therefore cost savings, compared with obtaining glass directly from virgin raw material.

In the process of manufacturing containers, a certain percentage of containers produced are discarded because they exhibit technical manufacturing defects which prevent them from working properly, for example preventing them from being properly capped. There is also a certain percentage of discarded containers because these containers exhibit aesthetic manufacturing defects, such as bubbles, scratches, corrugations, etc., which while they do not alter their functionality, they do alter their appearance.

All these discarded containers can be recycled in the same factory, putting them back into the glass furnace, without altering the color of the glass batch being manufactured, since all the containers recycled this way have all identical color and shade. This type of recycled glass is known as pre-consumer glass.

The use of recycled post-consumer glass, i.e., glass that has already been used by consumers and has been recovered, typically by means of selective collection processes, is also known. This recycled post-consumer glass is a heterogeneous glass with heterogeneous chromatic composition, having a mixture of different transparencies, of different shades of color, and also of different color saturations, so it is typically only used in small proportions to prevent the use from noticeably affecting the color of the containers to be manufactured.

Said recycled post-consumer glass is usually separated by transparency ranges, whether by means of automatic selection devices or by means of a manual sorting process, for example by the user recycling it, separating the predominantly transparent colorless or colored glasses from the hardly transparent colored glasses, for example brown or green glasses, typically used in the beer and wine industries. Typically, said hardly transparent colored glasses are considered to be those that let less than 75%, and preferably less than 60%, of the incident visible light pass therethrough.

These selection systems are flawed, so even the selected recovered post-consumer glass has a heterogeneous mixture of predominantly transparent colorless glass, predominantly transparent colored glass, and hardly transparent colored glass.

In some cases, the glass can also be separated by colors, distinguishing green glass, brown glass, or even blue glass.

However, these methods do not allow the separation of glasses of different shades of the same color, for example different shades of color on predominantly transparent glass or different shades of color on hardly transparent glass.

Therefore, recycled post-consumer glass, even when selected by transparencies, has a heterogeneous coloring.

Furthermore, due to the heterogeneous origin of the recycled post-consumer glass, that mixtures of different colors vary with each lot, therefore being somewhat unpredictable, so for the manufacturing of containers, recovered post-consumer glass is normally used in low percentages to prevent unpredictable variations of the shade of the resulting containers. US2020071221 A1 discloses a method for manufacturing multi-colored glass containers from waste glass that may be opaque, whereby the waste glass comprises two waste glass types that are different in color. The waste glass batch is placed into a mold and sintered at 800-950°C, whereby further colorants may be added.

CZ116 U1 teaches the hand-manufacture of a multi-colored glass vase from differently colored waste glass through glass casting.

DE69107012 T2 describes the manufacture of glass bottles having different color patterns. Therefore, the incorporation of recycled post-consumer glass in high percentages, greater than 80% or even greater than 90%, is not used for the manufacture of containers for retail use, because the exact shade of the resulting color is unpredictable.

### Brief Description of the Invention

According to a first aspect, the present invention relates to a fabrication method of mass-produced glass containers with visible light shielding using recovered post-consumer glass, as described in claim 1.

The proposed method comprises the following steps:
obtaining successive batches of raw material for glass manufacture, each batch including between 80% and 100% by weight of a mixture of pieces of soda-lime-silica recovered post-consumer glass with a heterogeneous chromatic composition predominantly transparent;
mixing to the successive batches of raw material visible light shielding additives including at least cobalt oxide, nickel oxide, manganese oxide, chromium oxide and iron oxide;
melting the successive batches of raw material and automatically manufacturing therewith the mass-produced glass containers with a glass thickness of at least 1,5mm and/or with a glass thickness in most of the receptacle of at least 2mm through an automatic compression and/or blow molding process;
detecting and rejecting manufactured containers with permeability against visible light between 450nm and 680nm wavelength above 3% or above 1%, for example using an automatic detection process.

The glass obtained by this method is a visible light shielded glass with a violet color.

The use of recovered post-consumer glass, i.e., glass that has reached the retail market, usually in the form of bottles, and has been recovered through a recovery system for recycling, has the drawback of being from an uncertain source and of involving a heterogeneous mixture of colors and therefore of compositions.

Typically, the pieces of recovered post-consumer glass used as raw material in the production of predominantly transparent containers have been kept in discrete percentages, usually less than 15%, for the purpose of limiting chromatic contamination of the containers to be manufactured with the colors of the recovered post-consumer glass.

According to the present method, the raw material will contain at least 80% by weight of predominantly transparent pieces of recovered post-consumer glass having a heterogeneous and variable chromatic composition over time, so the different successive batches of raw material will have a different chromatic composition.

The mixture of chromatically heterogeneous pieces of post-consumer glass will preferably comprise a mixture of pieces of predominantly transparent colorless glass in a first percentage, and of pieces of predominantly transparent colored glass in a second percentage and/or of pieces of hardly transparent colored glass in a third percentage.

Preferably, the sum of the second percentage and of the third percentage represents at least 20% of the total weight of the mixture of pieces of recovered glass at least in most of the batches.

Most of the post-consumer glass is transparent glass, used to produce jars and bottles, therefore the first percentage will be typically greater than the second and third percentages.

Predominantly transparent glass is understood to be one that lets more than 75% of the incident visible light pass therethrough, and hardly transparent glass is understood to be one that lets equal to or less than 75% of the incident visible light pass therethrough.

In the predominantly transparent glass, the specular transmission of visible light therethrough predominates over the diffuse transmission and over the reflection of visible light.

In the colored glass, the absorption of the visible light traversing the container is nonhomogeneous in different visible light frequency ranges, following a visible light absorption pattern, therefore being colored containers, as they absorb more certain light frequencies corresponding to certain colors, modifying the color of the light that passes therethrough.

The pieces of colored glass may comprise pieces of predominantly transparent colored glass, which lets more than 75% of the incident visible light pass therethrough, and/or of pieces of hardly transparent colored glass, which lets less than 75% of the incident visible light pass therethrough.

The pieces of colored glass may comprise pieces of green glass, brown glass, and optionally blue glass, black glass and/or violet glass, in variable proportions in successive batches.

Since the pieces of recovered post-consumer glass are predominantly transparent, and since they constitute the majority of the raw material (at least 80%, but optionally may constitute at least 90% or 95% by weight of the batches of raw material), the use of this recovered post-consumer glass as raw material in high percentages may result in containers predominantly transparent, but colored in some degree due to chromatic contamination.

Different containers manufactured with different batches of raw material will have a different coloring with respect to one another.

Consumer disposable products, such bottles, and jars, which constitute the recovered post-consumer glass, are commonly made of soda-lime-silica glass.

The soda-lime-silica glass contains silicon oxide, typically in a percentage between 70% and 80% by weight, preferably between 72% and 75% by weight, sodium oxide, typically in a percentage between 13% and 19% by weight, preferably between 15% and 17% by weight, calcium oxide, typically in a percentage between 3% and 8% by weight, preferably between 4% and 6% by weight, potassium oxide, , typically in a percentage between 0,2% and 1,2% by weight, preferably between 0,5% and 0,7% by weight, magnesium oxide, typically in a percentage between 2% and 5% by weight, preferably between 3% and 4% by weight, and aluminum oxide, typically in a percentage between 0,2% and 2% by weight, preferably between 0,8% and 1,2% by weight. The recovered post-consumer glass will also include other additives which provides color to some of the pieces contained in the batch.

The present invention proposes the inclusion of visible light shielding additives in a proportion selected to provide a visible light permeability, between 450nm and 680nm wavelength, below 3%, below 1% or even of 0%, when the glass thickness is equal or above 1,5mm or above 2mm. Therefore, it is preferred that at least most of the receptacle, or preferably all the receptacle has a glass thickness of at least 1,5mm or more preferably of at least 2mm. Optionally, the neck region of the receptacle, adjacent to the opening of the receptacle, may have a thickness comprised between 1,5mm and 2mm, and the rest of the receptacle may have a thickness equal or above 2mm.

Those visible light shielding additives are cobalt oxide, nickel oxide, manganese oxide, chromium oxide and iron oxide.

Cobalt oxide can be present, for example, in a weight percentage of between 0,05% and 5% by weight, between 0,05% and 1% by weight, or between 0,1% and 0,5% by weight.

Nickel oxide can be present, for example, in a weight percentage of between 0,05% and 5% by weight, between 0,05% and 1% by weight, or between 0,1% and 0,5% by weight.

Manganese oxide can be present, for example, in a weight percentage of between 0,05% and 5% by weight, or between 0,5% and 1,5% by weight, or 0,7 and 1,3% by weight.

Iron oxide can be present, for example, in a weight percentage of between 0,01% and 5% by weight, or between 0,1% and 1,5% by weight, or 0,7 and 1,3% by weight.

Chromium oxide can be present, for example, in a weight percentage of between 0,01% and 5% by weight, or between 0,01% and 1,5% by weight, or 0,1 and 1% by weight.

Those additives produce a glass with a dark violet color which provides shielding, preferably complete shielding when the glass thickness is above 1,5, or above 2mm, against the visible light on the frequencies between 450nm and 680nm. The visible light in those frequencies can be harmful for some products to be stored in the glass containers, especially natural products, high-grade natural products, plant concentrates, herbs, vegetables, algae-like products, olive-oil like products, body creams and other cosmetic or dietary products. Natural products, such as natural dietary supplements, phyto-therapeutic agents, etheric oils or homeopathic medicines, are high-grade products.

A problem in storing this type of high-grade products is that they are receptive to decay, whereby the quality of this type of products decreases during storage.

The proposed container for such products is formulated such that certain UV light can permeate in order to permit stimulating of the bio-energy of the products, and visible light in the range between 450nm and 680n cannot permeate so as to prevent biological decomposition of the products.

To produce the proposed container with visible light shielding properties, the raw material including the recovered post-consumer glass in high percentage, and the proposed visible light shielding additives, are mixed and molten and used to automatically mass-produce the glass receptacles.

The automatic mass-production of glass bottles typically comprises a first compression molding of the opening of the container in a compression mold, generating a parison, and then the insertion of the parison into a blow mold where the parison expands by blowing inside the molding cavity of said blow mold, defining the shape and the size of the bottle against the inner surface of the mold.

The mold will typically be formed by at least two complementary halves that can be opened to facilitate removing the produced receptacle therefrom. The receptacle is typically a bottle or a jar.

The incorporation of a high percentage of pieces of non-colorless recovered glass in raw material will cause a noticeable alteration of the dark violet color of the manufactured containers, because said non-colorless recovered glass will incorporate color additives and compounds in the raw material in a proportion that is sufficient to cause a visible effect in the resulting containers. When mixed with the above described additives, those unknown color additives already contained in the recovered post-consumer glass can negatively affect the shielding properties of the resulting glass.

Therefore, the proposed method further includes a step of automatically detecting and rejecting manufactured containers providing permeability against visible light between 450nm and 680nm wavelength above 3% or above 1%, or preferably any permeability above 0%, on the produced receptacles++.

In this manner, any batch of raw material containing additives which negatively affect the shielding properties of the produced receptacles will be detected, rejecting the produced receptacles.

The automatic detection of bottles with manufacturing defects usually involves the use of optical detectors, such as cameras and/or laser meters, as well as a control device which executes an algorithm that analyzes the data obtained by the optical detectors to detect the manufacturing defects which exceed the predefined tolerances stored in the control device. This can be achieved, for example, by comparing the images obtained by the cameras with reference images stored in the control device.

Those bottles exhibiting dimensional defects above predefined tolerance thresholds are rejected. The defects may affect the bottle as a whole or parts thereof. For example, in the opening, tolerances are usually much smaller since the correct closure of the bottle is essential and largely depends on the dimensional and shape precision of its opening, so the automatic detection of dimensional manufacturing defects is usually concentrated in said area of the opening.

In the proposed invention, this automatic quality control also includes a permeability detection, for example by projecting a known amount of visible light against a visible light sensor interposing the glass of the produced receptacle therebetween, allowing the detection of the permeability to visible light of the produced glass receptacle.

The method may also comprise automatically detecting the heterogeneous chromatic composition of the mixture of pieces of soda-lime-silica recovered post-consumer glass of each batch.

Then, the percentages of the visible light shielding additives can be automatically adjusted in response to the detected chromatic composition and considering stored data related to the amounts of each visible light shielding additives required to obtain glass containers providing permeability against visible light between 450nm and 680nm wavelength below 3% or below 1% using recovered post-consumer glass with different chromatic compositions.

This automatic adjustment can be produced by an algorithm executed in a computer processor.

The stored data may include, for example, different composition formulations adapted to recovered post-consumer glass with different chromatic compositions. For example, the stored data may include different formulations of the visible light shielding additives to be added to the raw material, each formulation defining different percentages of such visible light shielding additives. Each formulation of the visible light shielding additives will be applicable when the detected chromatic composition of the raw material is within or close to a certain range of chromatic compositions of the raw material associated with such particular formulation of the visible light shielding additives.

Additionally or alternatively, a predefined chromatic range of the raw material can be defined, typically corresponding to the average chromatic composition of the recovered post-consumer glass or to a target chromatic composition of the recovered post-consumer glass, for which the amounts of the visible light shielding additives has been previously defined to produce the desired visible light shielding.

In this case, the method may also comprise, after automatically detecting the heterogeneous chromatic composition of the mixture of pieces of recovered post-consumer glass of each batch, detecting those batches which detected composition is above the predefined chromatic range and those batches which detected chromatic composition is below the predefined chromatic range. The batches above and below the predefined chromatic composition will be mixed to obtain a mixed batch within the predefined chromatic range, for which the amounts of the visible light shielding additives does not need to be adapted to produce the desired visible light shielding or requiring less modifications of such amounts.

Also, when a batch of recovered post-consumer glass has a detected chromatic composition above or below the predefined chromatic range, for example includes too much dark green or dark grown glass, or too low transparent color-less glass, then it can be mixed with chromatically homogeneous glass raw material in a percentage up to 20% by weight, or up to 10% by weight or up to 5% by weight, the percentage being selected to obtain a batch of raw material with a chromatic composition within the predefined chromatic range. In other words, the percentage of the recovered post-consumer glass in the raw material can be adjusted, modifying the amount of chromatically homogeneous glass raw material (typically transparent colorless soda-lime-silica glass or virgin raw material precursor of transparent colorless soda-lime-silica glass) mixed therewith, resulting in a raw material with a chromatic composition within the predefined chromatic range for which the amounts of the visible light shielding additives does not need to be adapted to produce the desired visible light shielding or requiring less modifications of such amounts.

Those proposed methods allow the use of a recovered post-consumer glass with a heterogeneous chromatic composition in a percentage above 80% without negatively affecting the visible light shielding of the resulting receptacles, even if the apparent color of the produced receptacles may be variable from batch to batch.

The method may further comprise detecting and rejecting manufactured containers with a glass thickness less than 4mm, for example through an automatic detection process.

It is also preferred to obtain receptacles with a permeability between 15% and 50% in the ultraviolet spectrum between 320nm and 440nm wavelength, preferably with a peak permeability at 385nm, and/or with a permeability up to 60% in the infrared spectrum between 700nm and 1100nm wavelength. Therefore, the method may further comprise detecting and rejecting manufactured containers with a permeability below 15% or above 50% in the ultraviolet spectrum between 320nm and 440nm wavelength and/or with a permeability above 60% in the infrared spectrum between 700nm and 1100nm wavelength.

The formulation of the visible light shielding additives described above, as part of the stored data or adapted to a specific predefined chromatic range of the recovered post-consumer glass, can be also adjusted to provide a permeability between 15% and 50% in the ultraviolet spectrum between 320nm and 440nm wavelength and/or to provide a permeability up to 60% in the infrared spectrum between 700nm and 1100nm wavelength when the glass thickness is of at least 4mm.

When a receptacle is rejected for having a permeability to the visible light above 3% or above 1%, the detected chromatic composition of the recovered post-consumer glass and the percentage thereof in the batch of raw material used in the production of the rejected receptacle are stored as part of the stored data, together with the amounts of each visible light shielding additives mixed with said batch.

This stored information can be used to improve the stored formulations of the visible light shielding additives, to modify the algorithm mentioned above, and/or can be used to modify the predefined chromatic range for which the formulation of the visible light shielding is adapted.

The temperature of the molten material and/or of the molds may be selected to generate visible flaws in the manufactured containers, using sub-optimal values. Optionally, the raw material may also contain bubble precursor particles which, when melted and solidified, generate small gas bubbles inside the glass.

Said visible flaws, such as bubbles or corrugations, for example, provide greater identifiability of the container, as a container obtained from recovered post-consumer glass.

According to a second aspect, the present invention is related to a mass-produced glass container with visible light shielding made of soda-lime-silica glass further including cobalt oxide, nickel oxide, manganese oxide, chromium oxide and iron oxide, obtained from recovered post-consumer glass according to the method described above and also in claims 1 to 12.

The proposed receptacle will have a glass thickness of at least 1,5mm, or a thickness of at least 2mm on most or all the receptacle and will provide permeability against visible light between 450nm and 680nm wavelength below 3% or below 1%.

Optionally, the receptacle will have a glass thickness of at least 4mm in most of it (for example excluding the neck region) or all of it and a permeability below 50% in the ultraviolet spectrum between 320nm and 440nm wavelength and/or a permeability below 60% in the infrared spectrum between 700nm and 1100nm wavelength.

The container may also include noticeable cosmetic defects selected from bubbles, scratches, corrugations, or roughness on the surface generating noticeable optical aberrations.

Other features of the invention will become apparent in the following detailed description of an embodiment.

### Description of the Figures

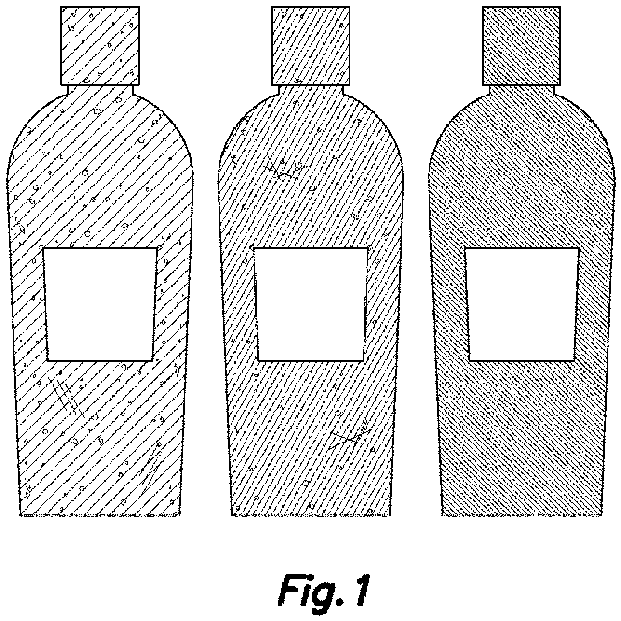

Figure 1 shows a schematic elevational view of three containers, in the form of bottles, constituting the set of mass-produced containers, the three containers having an identical shape, size, content, and labeling but differing in color, depicted by means of a different hatching, and also differing in that they include different noticeable aesthetic defects. In this example, the container on the left includes a number of bubbles and some scratches, the container in the middle includes fewer bubbles and other different scratches, and the container on the right does not include any bubbles or scratches.
Fig. 2 shows a graph showing wavelength versus permeability for glass with visible light shielding additives according to the present invention having thicknesses of 1mm (see line A), 2mm (see line B), 3mm (see line C), 4mm (see line D), and 5mm (see line E).
FIG. 3 shows a graph showing wavelength versus permeability for brown glasses having thicknesses of 1mm (see line A), 2mm (see line B), 3mm (see line C), 4mm (see line D), and 5mm (see line E).
FIG. 4 shows a graph showing wavelength versus permeability for green glasses having thicknesses of 1mm (see line A), 2mm (see line B), 3mm (see line C), 4mm (see line D), and 5mm (see line E).
FIG. 5 shows a graph showing wavelength versus permeability for blue glasses having thicknesses of 1mm (see line A), 2mm (see line B), 3mm (see line C), 4mm (see line D), and 5mm (see line E).

### Detailed Description of an Embodiment

The embodiments described below are non-limiting illustrations of the present invention.

The containers from the proposed set of mass-produced glass containers all have an identical shape, content, and labeling.

Each of said mass-produced containers from the set is a made of a soda-lime-silica glass containing silicon oxide, typically in a percentage between 72% and 75% by weight, sodium oxide, typically in a percentage between 15% and 17% by weight, calcium oxide, typically in a percentage between 4% and 6% by weight, potassium oxide, typically in a percentage between 0,5% and 0,7% by weight, magnesium oxide, typically in a percentage between 3% and 4% by weight, and aluminum oxide, typically in a percentage between 0,8% and 1,2% by weight.

The proposed mass-produced containers further include the following visible light shielding additives: cobalt oxide, nickel oxide, manganese oxide, chromium oxide and iron oxide, which produce a predominantly dark violet container with a permeability to the visible light between 450nm and 680nm wavelength below 3%, below 1%, or preferably no-permeability at all.

To obtain such effect, the visible light additives are preferably provided in the following proportions by weight, in regard to the total weight of the raw material: cobalt oxide is present in a weight percentage of between 0,05% and 1% by weight, or between 0,1% and 0,5% by weight, nickel oxide is present in a weight percentage of between 0,05% and 1% by weight, or between 0,1% and 0,5% by weight; manganese oxide is present in a weight percentage of between 0,5% and 1,5% by weight, or 0,7 and 1,3% by weight; iron oxide is present in a weight percentage of between 0,1% and 1,5% by weight, or 0,7 and 1,3% by weight; chromium oxide is present in a weight percentage of between 0,01% and 1,5% by weight, or 0,1 and 1% by weight.

The amount of visible light shielding additives may also be selected to obtain receptacles with a permeability between 15% and 50% in the ultraviolet spectrum between 320nm and 440nm wavelength, preferably with a peak permeability at 385nm, and/or with a permeability up to 60% in the infrared spectrum between 700nm and 1100nm wavelength.

### Experiment 1: Using transparent color-less glass as raw material

A series of tests was carried out to determine the optimal amount of visible light shielding additives. The objective, for an average glass thickness of 4 mm, was as follows;
a) to achieve a permeability of a maximum of 40%-50% in the UV/violet spectrum between 320 nm-440 nm wavelength (nm=nanometer),
b) to achieve a complete shielding in the visible part of the light spectrum between 450 nm-680 nm wavelength,
c) to achieve a desired permeability of about 50%-60% in the Infrared-range between 700-1100 nm wavelength.

By means of transmission measurements it is possible to monitor precisely whether a glass mixture fulfils the objectives.

The required transmission curve was achieved by adding a number of metal oxides to the basic formula for clear glass, i.e., Cobalt oxide present in a weight percentage range of between 0.05 and 1.0%; Nickel oxide present in weight percentage range of between 0.05 and 1.0%; Manganese oxide present in a weight percentage range of between 0.5 and 1.5%; (in the form of MANGALOX); Chromium oxide present in a weight percentage range of between 0.01 and 1.5% (in the form of PORTACHROM) and Iron oxide present in a weight percentage range of between 0.01 and 1.5% (in the form of MANGALOX and PORTACHROM).

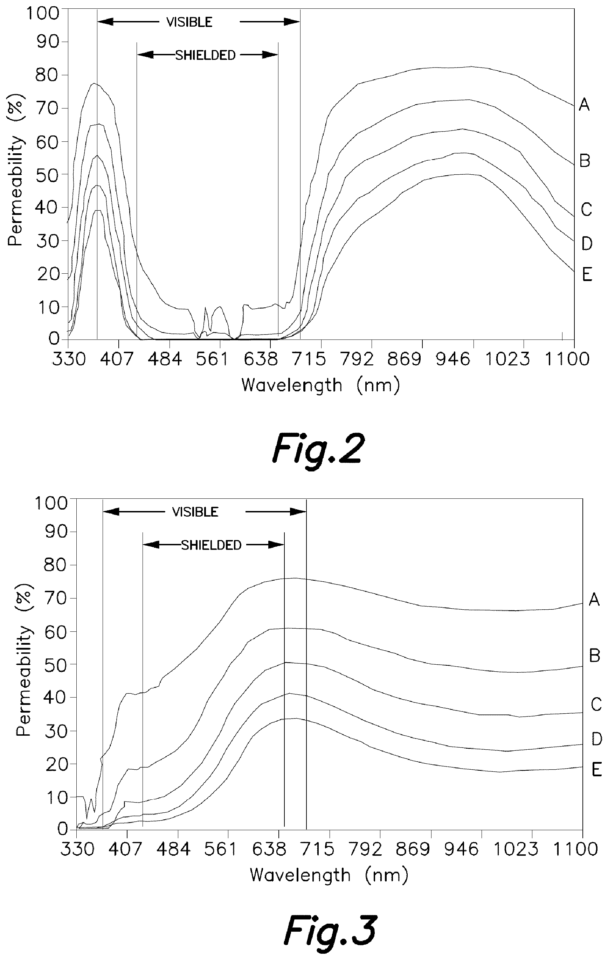

Because each oxide has a very specific influence on the transmission curve, the curve can be changed by altering the respective ratios. The final result can be seen in FIG. 2.

Transparent color-less glass formula (per batch)
quartz sand=442.6 kg
dolomite=90.8 kg
soda=133.0 kg
calcium carbonate = 46.0 kg
Frit (Al203, Fe 203, TiO3, CaO, MgO, Na2O, KaO, Na2CO3) = 19.0 kg

Visible light shielding additives (per batch):
Cobalt oxide 2.2 kg
Nickel oxide 1.2 kg
MANGALOX (MnO2=79%, MnO=3%, Fe203=5.5%, Al203=3%, SiO2=5%, Na2O=0.1%, K2O=0.7%, MgO=0.2% CaO=0.1%) = 6.5 kg
PORTACHROM (Cr203=44%, FeO=24%, SiO2=3.5%, Al203/TiO2=15%, MgO=10%) = 1.2 kg.

The advantages of the glass composition according to the present invention compared to normal glass: optimal protection against light; natural bio-energetic preservation; bio-stimulation by energy-rich UV and violet light; quality retention over a long period of time; better market position relative to other suppliers and 100% recyclable.

### Experiment 2: Using recovered post-consumer glass with heterogenic chromatic composition as raw material

The experiment 1 has been repeated using recovered post-consumer glass with heterogenic chromatic composition in percentages of 80%, 90% and 100% by weight of the raw material mixed with transparent color-less glass in percentages of 20%, 10% and 0% respectively.

The chromatic composition of each batch of recovered post-consumer glass has been measured before melting, measuring the percentage of transparent color-less glass, the percentage of transparent colored glass and the percentage of hardly transparent colored glass.

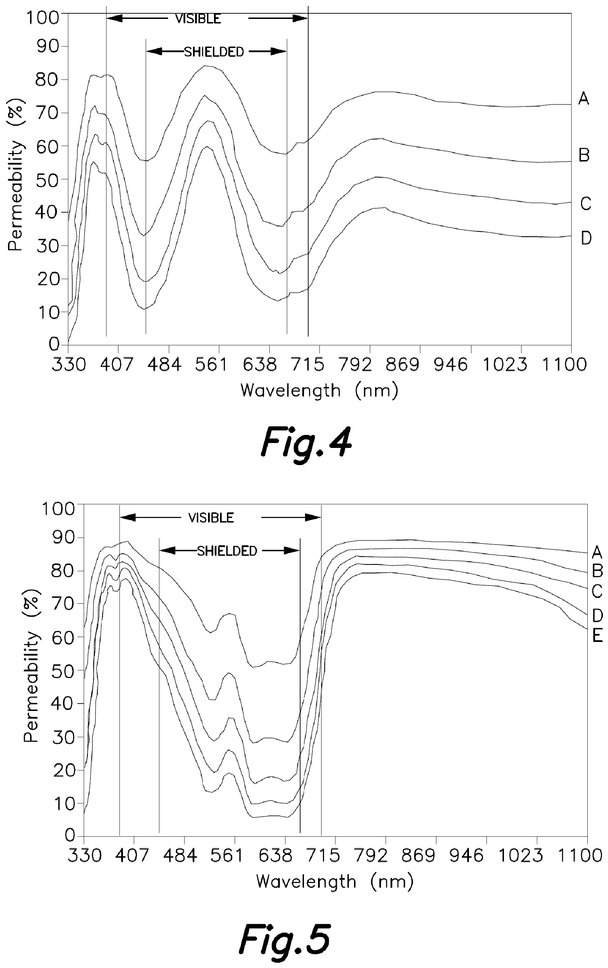

For the transparent colored glass and for the hardly transparent colored glass, also the percentages of green glass, brown glass and blue glass has been measured for each batch. As shown in Figs. 3, 4 and 5, green and blue transparent glass is very permeable to ultraviolet light, but brown glass is very opaque to ultraviolet light. Therefore, a high percentage of brown glass in the chromatic composition of the recovered post-consumer glass can lead to obtaining a receptacle with a permeability to ultraviolet light below 15%, which is too low to produce beneficial effects on the contained products.

With those batches of raw material containing recovered post-consumer glass in a percentage equal or above 80% and using the same visible light shielding additives in the same proportions described in Experiment 1. Variations in the permeability to the visible light of the resulting receptacles has been measured.

With the obtained information, a chromatic range of the recovered post-consumer glass has been defined within which the visible light shielding additives, in the percentages used in this experiment, produce the desired shielding to the visible light.

The predefined chromatic range describes a range of percentages of transparent colorless glass, a range of percentages of transparent colored glass and a range of hardly transparent colored glass present in the recovered post-consumer glass to be used as a raw material.

Any recovered post-consumer glass which chromatic composition that is not within the predefined chromatic range may result in receptacles not producing the desired shielding against the visible light, and additional measures have to be taken to ensure that this result is achieved.

Those additional measures may include different proportions of at least some of the visible light shielding additives, which can be determined through additional experimentation for different predefined chromatic ranges, and which can be stored as stored data to be used during the production of the proposed receptacles, selecting the formulation of the visible light additives depending on the detected chromatic composition of the recovered post-consumer glass to be used as raw material.

Those additional measures may include also manipulate the batches of recovered post-consumer glass to modify the resulting chromatic composition thereof to be within the predefined chromatic range, for example modifying the percentage of recovered post-consumer glass used in the mix constitutive of the raw material, for example adding additional transparent color-less glass, or mixing different batches with different chromatic compositions.

## Claims

1. A fabrication method of mass-produced glass containers with visible light shielding using recovered post-consumer glass, the method comprising:
obtaining successive batches of raw material for glass manufacture, each batch including between 80% and 100% by weight of a mixture of pieces of soda-lime-silica recovered post-consumer glass with a heterogeneous chromatic composition predominantly transparent;
mixing to the successive batches of raw material visible light shielding additives including at least cobalt oxide, nickel oxide, manganese oxide, chromium oxide and iron oxide;
melting the successive batches of raw material and automatically manufacturing therewith the mass-produced glass containers with a glass thickness of at least 1,5mm and/or with a glass thickness in most of the receptacle of at least 2mm through an automatic compression and/or blow molding process;
detecting and rejecting manufactured containers with permeability against visible light between 450nm and 680nm wavelength above 3% or above 1%.

2. The method according to claim 1 wherein the method further comprises detecting the heterogeneous chromatic composition of the mixture of pieces of soda-lime-silica recovered post-consumer glass of each batch, and automatically adjusting the percentages of the visible light shielding additives in response to the detected chromatic composition and considering stored data related to the amounts of each visible light shielding additives required to obtain glass containers providing permeability against visible light between 450nm and 680nm wavelength below 3% or below 1% using recovered post-consumer glass with different chromatic compositions.

3. The method according to claim 1 or 2 wherein the method further comprises detecting the heterogeneous chromatic composition of the mixture of pieces of recovered post-consumer glass of each batch, and
mixing batches which detected chromatic composition is above a predefined chromatic range with batches which detected chromatic composition is below the predefined chromatic range; and/or
mixing the batch of post-consumer glass with chromatically homogeneous glass raw material in a percentage up to 20% by weight, or up to 10% by weight or up to 5% by weight, the percentage being selected to obtain a batch of raw material with a chromatic composition within a predefined chromatic range.

4. The method according to claim 1, 2 or 3 wherein the method further comprises automatically detecting and rejecting manufactured containers with a glass thickness less than 4mm and/or providing a permeability below 15 or above 50% in the ultraviolet spectrum between 320nm and 440nm wavelength and/or providing a permeability above 60% in the infrared spectrum between 700nm and 1100nm wavelength.

5. The method according to claim 2 or 4 when depending on claim 2, wherein the detected chromatic composition of the post-consumer glass and the percentage thereof in the batch of raw material used in the production of a rejected container, and the amounts of each visible light shielding additive mixed with said batch, are stored as part of the stored data and used to adjust the amounts of additives.

6. The method according to claim 3 or 4 when depending on claim 3, wherein the detected chromatic composition of the post-consumer glass and the percentage thereof in the batch of raw material used in the production of a rejected receptacle, and the amounts of each visible light shielding additive mixed with said batch, are stored as part of the stored data and used to determine the predefined chromatic range.

7. The method according to any preceding claim wherein
cobalt oxide is present in a weight percentage of between 0,05% and 5% by weight, between 0,05% and 1% by weight, or between 0,1% and 0,5% by weight; and/or
nickel oxide is present in a weight percentage of between 0,05% and 5% by weight, between 0,05% and 1% by weight, or between 0,1% and 0,5% by weight; and/or
manganese oxide is present in a weight percentage of between 0,05% and 5% by weight, or between 0,5% and 1,5% by weight, or 0,7 and 1,3% by weight; and/or
iron oxide is present in a weight percentage of between 0,01% and 5% by weight, or between 0,1% and 1,5% by weight, or 0,7 and 1,3% by weight; and/or
chromium oxide is present in a weight percentage of between 0,01% and 5% by weight, or between 0,01% and 1,5% by weight, or 0,1 and 1% by weight.

8. The method according to any preceding claim wherein the mixture of pieces of recovered post-consumer glass constitutes 90% or 95% by weight of the batches of raw material.

9. The method according to any one of the preceding claims, wherein the mixture of chromatically heterogeneous pieces of post-consumer glass comprises a first percentage by weight of predominantly transparent colorless glass that lets more than 75% of the incident visible light pass therethrough, a second percentage by weight of predominantly transparent colored glass that lets more than 75% of the incident visible light pass therethrough and/or a third percentage by weight of hardly transparent colored glass that lets equal to or less than 75% of the incident visible light pass therethrough, with the first percentage and the second and/or third percentages being variable between different batches of raw material.

10. The method according to claim 9, wherein the pieces of colored glass comprise pieces of glass with different shades of green, with different shades of brown and optionally different shades of blue, black and/or violet, in variable proportions in successive batches.

11. The method according to any one of the preceding claims, wherein the raw material contains bubble precursor particles, and/or wherein the temperature of the molten material and/or of the molds is selected to generate flaws visible to the naked eye in the manufactured containers.

12. A mass-produced glass container with visible light shielding made of soda-lime-silica glass further including cobalt oxide, nickel oxide, manganese oxide, chromium oxide and iron oxide, obtained from recovered post-consumer glass according to the method described in any one of preceding claims 1 to 11, the receptacle having a glass thickness of at least 2mm and providing permeability against visible light between 450nm and 680nm wavelength below 3% or below 1%.

13. The glass container according to claim 12 wherein the receptacle has a glass thickness of at least 4mm and has a permeability comprised between 15% and 50% in the ultraviolet spectrum between 320nm and 440nm wavelength and/or a permeability below 60% in the infrared spectrum between 700nm and 1100nm wavelength.

14. The glass container according to claim 12 or 13, wherein the container includes noticeable cosmetic defects selected from bubbles, scratches, corrugations, or roughness on the surface generating noticeable optical aberrations.

## Patentansprüche

1. Verfahren zur Herstellung von Glasbehältern aus Massenproduktion mit Abschirmung gegen sichtbares Licht unter Verwendung von wiedergewonnenem Altglas, wobei das Verfahren Folgendes umfasst:
Erhalten aufeinanderfolgender Chargen von Rohmaterial für die Glasherstellung, wobei jede Charge zwischen 80 Gew.-% und 100 Gew.-% eines Gemisches aus Stücken von wiedergewonnenem Kalk-Natron-Silikat-Altglas mit einer heterogenen chromatischen Zusammensetzung, die überwiegend transparent ist, beinhaltet;
Mischen von sichtbares Licht abschirmenden Additiven, die mindestens Kobaltoxid, Nickeloxid, Manganoxid, Chromoxid und Eisenoxid beinhalten, zu den aufeinanderfolgenden Chargen von Rohmaterial;
Schmelzen der aufeinanderfolgenden Chargen von Rohmaterial und automatisches Herstellen der Glasbehälter aus Massenproduktion damit mit einer Glasdicke von mindestens 1,5 mm und/oder mit einer Glasdicke im größten Teil des Gefäßes von mindestens 2 mm durch ein automatisches Press- und/oder Blasformverfahren;
Erkennen und Aussortieren von hergestellten Behältern mit einer Durchlässigkeit für sichtbares Licht bei einer Wellenlänge zwischen 450 nm und 680 nm von mehr als 3 % oder mehr als 1 %.

2. Verfahren nach Anspruch 1, wobei das Verfahren ferner Erkennen der heterogenen chromatischen Zusammensetzung des Gemischs aus Stücken von wiedergewonnenem Kalk-Natron-Silikat-Altglas aus jeder Charge und automatisches Einstellen der Prozentsätze der sichtbares Licht abschirmenden Additive in Reaktion auf die erkannte chromatische Zusammensetzung und unter Berücksichtigung gespeicherter Daten bezüglich der Mengen jedes sichtbares Licht abschirmenden Additivs, die erforderlich sind, um Glasbehälter zu erhalten, die eine Durchlässigkeit für sichtbares Licht bei einer Wellenlänge zwischen 450 nm und 680 nm von weniger als 3 % oder weniger als 1 % bereitstellen, wobei wiedergewonnenes Altglas mit unterschiedlichen chromatischen Zusammensetzungen verwendet wird, umfasst.

3. Verfahren nach Anspruch 1 oder 2, wobei das Verfahren ferner Erkennen der heterogenen chromatischen Zusammensetzung des Gemischs aus Stücken von wiedergewonnenem Altglas jeder Charge und
Mischen von Chargen, deren erkannte chromatische Zusammensetzung über einem vordefinierten chromatischen Bereich liegt, mit Chargen, deren erkannte chromatische Zusammensetzung unter dem vordefinierten chromatischen Bereich liegt, und/oder
Mischen der Charge von Altglas mit chromatisch homogenem Glasrohstoff in einem Prozentsatz von bis zu 20 Gew.-%, oder bis zu 10 Gew.-% oder bis zu 5 Gew.-% umfasst,
wobei der Prozentsatz ausgewählt wird, um eine Charge von Rohstoff mit einer chromatischen Zusammensetzung innerhalb eines vordefinierten chromatischen Bereichs zu erhalten.

4. Verfahren nach Anspruch 1, 2 oder 3, wobei das Verfahren ferner automatisches Erkennen und Aussortieren von hergestellten Behältern mit einer Glasdicke von weniger als 4 mm und/oder Bereitstellen einer Durchlässigkeit unter 15 oder über 50 % im ultravioletten Spektrum bei einer Wellenlänge zwischen 320 nm und 440 nm und/oder Bereitstellen einer Durchlässigkeit über 60 % im infraroten Spektrum bei einer Wellenlänge zwischen 700 nm und 1100 nm umfasst.

5. Verfahren nach Anspruch 2 oder 4, wenn es von Anspruch 2 abhängt, wobei die erkannte chromatische Zusammensetzung des Altglases und der Prozentsatz davon in der Charge des bei der Herstellung eines zurückgewiesenen Behälters verwendeten Rohmaterials und die Mengen jedes sichtbares Licht abschirmenden Additivs, das mit der Charge gemischt ist, als Teil der gespeicherten Daten gespeichert werden und zur Einstellung der Additivmengen verwendet werden.

6. Verfahren nach Anspruch 3 oder 4, wenn es von Anspruch 3 abhängt, wobei die erkannte chromatische Zusammensetzung des Altglases und der Prozentsatz davon in der Charge des bei der Herstellung eines zurückgewiesenen Gefäßes verwendeten Rohmaterials und die Mengen jedes sichtbares Licht abschirmenden Additivs, das mit der Charge gemischt ist, als Teil der gespeicherten Daten gespeichert werden und zur Bestimmung des vordefinierten chromatischen Bereichs verwendet werden.

7. Verfahren nach einem der vorhergehenden Ansprüche, wobei
Kobaltoxid in einem Gewichtsprozentsatz zwischen 0,05 Gew.-% und 5 Gew.-%, zwischen 0,05 Gew.-% und 1 Gew.-% oder zwischen 0,1 Gew.-% und 0,5 Gew.-% vorliegt; und/oder
Nickeloxid in einem Gewichtsprozentsatz zwischen 0,05 Gew.-% und 5 Gew.-%, zwischen 0,05 Gew.-% und 1 Gew.-% oder zwischen 0,1 Gew.-% und 0,5 Gew.-% vorliegt; und/oder
Manganoxid in einem Gewichtsprozentsatz zwischen 0,05 Gew.-% und 5 Gew.-%, oder zwischen 0,5 Gew.-% und 1,5 Gew.-% oder zwischen 0,7 Gew.-% und 1,3 Gew.-% vorliegt; und/oder
Eisenoxid in einem Gewichtsprozentsatz zwischen 0,01 Gew.-% und 5 Gew.-%, oder zwischen 0,1 Gew.-% und 1,5 Gew.-%, oder 0,7 und 1,3 Gew.-% vorliegt; und/oder
Chromoxid in einem Gewichtsprozentsatz zwischen 0,01 Gew.-% und 5 Gew.-%, oder zwischen 0,01 Gew.-% und 1,5 Gew.-%, oder 0,1 und 1 Gew.-% vorliegt.

8. Verfahren nach einem der vorhergehenden Ansprüche, wobei das Gemisch aus wiedergewonnenen Altglasstücken 90 Gew.-% oder 95 Gew.-% der Chargen des Rohmaterials ausmacht.

9. Verfahren nach einem der vorhergehenden Ansprüche, wobei das Gemisch aus chromatisch heterogenen Stücken von Altglas einen ersten Gewichtsprozentsatz an überwiegend transparentem farblosem Glas, das mehr als 75 % des einfallenden sichtbaren Lichts durchlässt, einen zweiten Gewichtsprozentsatz an überwiegend transparentem farbigem Glas, das mehr als 75 % des einfallenden sichtbaren Lichts durchlässt, und/oder einen dritten Gewichtsprozentsatz an kaum transparentem farbigem Glas umfasst, das 75 % oder weniger des einfallenden sichtbaren Lichts durchlässt, wobei der erste Prozentsatz und der zweite und/oder dritte Prozentsatz zwischen verschiedenen Chargen des Rohmaterials variabel sind.

10. Verfahren nach Anspruch 9, wobei die Stücke aus farbigem Glas Stücke aus Glas mit unterschiedlichen Grüntönen, mit unterschiedlichen Brauntönen und gegebenenfalls unterschiedlichen Blau-, Schwarz- und/oder Violetttönen in variablen Anteilen in aufeinanderfolgenden Chargen umfassen.

11. Verfahren nach einem der vorhergehenden Ansprüche, wobei das Rohmaterial Blasenvorläuferteilchen enthält und/oder wobei die Temperatur des geschmolzenen Materials und/oder der Formen so gewählt ist, dass in den hergestellten Behältern mit bloßem Auge sichtbare Fehler generiert werden.

12. Glasbehälter aus Massenproduktion mit Abschirmung gegen sichtbares Licht, hergestellt aus Kalk-Natron-Silikat-Glas, das ferner Kobaltoxid, Nickeloxid, Manganoxid, Chromoxid und Eisenoxid beinhaltet, erhalten aus wiedergewonnenem Altglas nach dem in einem der vorhergehenden Ansprüche 1 bis 11 beschriebenen Verfahren, wobei das Gefäß eine Glasdicke von mindestens 2 mm aufweist und eine Durchlässigkeit für sichtbares Licht bei einer Wellenlänge zwischen 450 nm und 680 nm von weniger als 3 % oder weniger als 1 % bereitstellt.

13. Glasbehälter nach Anspruch 12, wobei das Gefäß eine Glasdicke von mindestens 4 mm aufweist und eine Durchlässigkeit aufweist, die zwischen 15 % und 50 % im ultravioletten Spektrum bei einer Wellenlänge zwischen 320 nm und 440 nm und/oder eine Durchlässigkeit unter 60 % im infraroten Spektrum bei einer Wellenlänge zwischen 700 nm und 1100 nm umfasst.

14. Glasbehälter nach Anspruch 12 oder 13, wobei der Behälter auffällige kosmetische Mängel beinhaltet, die aus Blasen, Kratzern, Wellen oder Rauheiten auf der Oberfläche ausgewählt sind, die auffällige optische Aberrationen generieren.

## Revendications

1. Procédé de fabrication de récipients en verre produits en masse comportant une protection contre la lumière visible à l'aide de verre post-consommation récupéré, le procédé comprenant :
l'obtention de lots successifs de matière première pour la fabrication de verre, chaque lot comportant entre 80% et 100% en poids d'un mélange de morceaux de verre post-consommation récupéré de soude-chaux-silice ayant une composition chromatique hétérogène principalement transparente ;
le mélange aux lots successifs de matière première d'additifs de protection contre la lumière visible comportant au moins de l'oxyde de cobalt, de l'oxyde de nickel, de l'oxyde de manganèse, de l'oxyde de chrome et de l'oxyde de fer ;
la fusion des lots successifs de matière première et la fabrication automatique avec ceux-ci des récipients en verre produits en masse ayant une épaisseur de verre d'au moins 1,5 mm et/ou ayant une épaisseur de verre dans la plupart du réceptacle d'au moins 2 mm par un procédé de moulage par compression et/ou par soufflage automatique ;
la détection et le rejet des récipients fabriqués ayant une perméabilité contre la lumière visible à une longueur d'onde comprise entre 450 nm et 680 nm supérieure à 3% ou supérieure à 1%.

2. Procédé selon la revendication 1, dans lequel le procédé comprend en outre la détection de la composition chromatique hétérogène du mélange de morceaux de verre post-consommation récupéré de soude-chaux-silice de chaque lot, et l'ajustement automatique des pourcentages des additifs de protection contre la lumière visible en réponse à la composition chromatique détectée et prenant compte de données stockées relatives aux quantités de chaque additif de protection contre la lumière visible requises pour obtenir des récipients en verre offrant une perméabilité contre la lumière visible à une longueur d'onde comprise entre 450 nm et 680 nm inférieure à 3% ou inférieure à 1% à l'aide de verre post-consommation récupéré avec différentes compositions chromatiques.

3. Procédé selon la revendication 1 ou 2, dans lequel le procédé comprend en outre la détection de la composition chromatique hétérogène du mélange de morceaux de verre post-consommation récupéré de chaque lot, et
le mélange des lots dont la composition chromatique détectée est supérieure à un intervalle chromatique prédéfini avec de lots dont la composition chromatique détectée est inférieure à l'intervalle chromatique prédéfini ; et/ou
le mélange du lot de verre post-consommation avec de la matière première de verre chromatiquement homogène dans un pourcentage allant jusqu'à 20% en poids, ou jusqu'à 10% en poids ou jusqu'à 5% en poids, le pourcentage étant sélectionné pour obtenir un lot de matière première avec une composition chromatique dans un intervalle chromatique prédéfini.

4. Procédé selon la revendication 1, 2 ou 3 dans lequel le procédé comprend en outre la détection et le rejet automatique de récipients fabriqués ayant une épaisseur de verre inférieur à 4 mm et/ou offrant une perméabilité inférieure à 15 ou supérieure à 50% dans le spectre ultraviolet à une longueur d'onde comprise entre 320 nm et 440 nm et/ou offrant une perméabilité supérieure à 60% dans le spectre infrarouge à une longueur d'onde comprise entre 700 nm et 1100 nm.

5. Procédé selon la revendication 2 ou 4, lorsqu'elle dépend de la revendication 2, dans lequel la composition chromatique détectée du verre post-consommation et le pourcentage de celle-ci dans le lot de matière première utilisé dans la production d'un récipient rejeté, et les quantités de chaque additif de protection contre la lumière visible mélangé avec ledit lot, sont stockés en tant que les données stockées et utilisés pour ajuster les quantités de additives.

6. Procédé selon la revendication 3 ou 4, lorsqu'elle dépend de la revendication 3, dans lequel la composition chromatique détectée du verre post-consommation et le pourcentage de celle-ci dans le lot de matière première utilisé dans la production d'un réceptacle rejeté, et les quantités de chaque additif de protection contre la lumière visible mélangé avec ledit lot, sont stockés en tant que les données stockées et utilisés pour déterminer l'intervalle chromatique prédéfini.

7. Procédé selon l'une quelconque des revendications précédentes, dans lequel l'oxyde de cobalt est présent dans un pourcentage en poids compris entre 0,05% et 5% en poids, entre 0,05% et 1% en poids, ou entre 0,1% et 0,5% en poids ; et/ou
l'oxyde de nickel est présent dans un pourcentage en poids compris entre 0,05% et 5% en poids, entre 0,05% et 1% en poids, ou entre 0,1% et 0,5% en poids ; et/ou
l'oxyde de manganèse est présent dans un pourcentage en poids compris entre 0,05% et 5% en poids, ou entre 0,5% et 1,5% en poids, ou 0,7 et 1,3% en poids ; et/ou
l'oxyde de fer est présent dans un pourcentage en poids compris entre 0,01% et 5% en poids, ou entre 0,1% et 1,5% en poids, ou 0,7 et 1,3% en poids ; et/ou
l'oxyde de chrome est présent dans un pourcentage en poids compris entre 0,01 % et 5% en poids, ou entre 0,01% et 1,5% en poids, ou 0,1 et 1% en poids.

8. Procédé selon l'une quelconque des revendications précédentes, dans lequel le mélange de morceaux de verre post-consommation récupéré constitue 90% ou 95% en poids des lots de matière première.

9. Procédé selon l'une quelconque des revendications précédentes, dans lequel le mélange de morceaux de verre post-consommation chromatiquement hétérogènes comprend un premier pourcentage en poids de verre incolore principalement transparent laissant passer plus de 75% de la lumière visible incidente, un deuxième pourcentage en poids de verre coloré principalement transparent laissant passer plus de 75% de la lumière visible incidente et/ou un troisième pourcentage en poids de verre coloré à peine transparent laissant passer un pourcentage égal ou inférieur à 75% de la lumière visible incidente, le premier pourcentage et le deuxième et/ou troisième pourcentages étant variables entre différents lots de matière première.

10. Procédé selon la revendication 9, dans lequel les morceaux de verre coloré comprennent des morceaux de verre ayant différentes nuances de vert, ayant différentes nuances de marron et optionnellement ayant différentes nuances de bleu, de noir et/ou de violet, dans des proportions variables dans des lots successifs.

11. Procédé selon l'une quelconque des revendications précédentes, dans lequel la matière première contient des particules précurseurs de bulles, et/ou dans lequel la température de la matière fondue et/ou des moules est choisie pour générer des défauts visibles à l'oeil nu dans les récipients fabriqués.

12. Récipient en verre produit en masse comportant une protection contre la lumière visible réalisé en verre de soude-chaux-silice comportant en outre de l'oxyde de cobalt, de l'oxyde de nickel, de l'oxyde de manganèse, de l'oxyde de chrome et de l'oxyde de fer, obtenu à partir de verre post-consommation récupéré selon le procédé décrit dans l'une quelconque des revendications précédentes 1 à 11, le réceptacle ayant une épaisseur de verre d'au moins 2 mm et offrant une perméabilité contre la lumière visible à une longueur d'onde comprise entre 450 nm et 680 nm inférieure à 3% ou inférieure à 1%.

13. Récipient en verre selon la revendication 12, dans lequel le réceptacle présente une épaisseur de verre d'au moins 4 mm et présente une perméabilité comprise entre 15% et 50% dans le spectre ultraviolet à une longueur d'onde comprise entre 320 nm et 440 nm et/ou présente une perméabilité inférieure à 60% dans le spectre infrarouge à une longueur d'onde comprise entre 700 nm et 1100 nm.

14. Récipient en verre selon la revendication 12 ou 13, dans lequel le récipient comporte des défauts cosmétiques perceptibles choisis parmi des bulles, des rayures, des ondulations ou une rugosité sur la surface générant des aberrations optiques perceptibles.
